(19)

**Europäisches Patentamt**

**European Patent Office**

**Office européen des brevets**

(11) **EP 4 571 281 A1**

(12) **EUROPEAN PATENT APPLICATION**

(43) Date of publication:
**18.06.2025 Bulletin 2025/25**

(21) Application number: **24219552.7**

(22) Date of filing: **12.12.2024**

(51) International Patent Classification (IPC):
**G01L 9/00** *(2006.01)*    **G01L 9/12** *(2006.01)*
**G01L 19/00** *(2006.01)*    **G01L 19/04** *(2006.01)*
**G01L 27/00** *(2006.01)*

(52) Cooperative Patent Classification (CPC):
**G01L 9/0072; G01L 9/125; G01L 19/0092;
G01L 19/04; G01L 27/002; G01L 27/005**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.12.2023 US 202363609669 P
04.12.2024 US 202418968368**

(71) Applicant: **Illinois Tool Works Inc.
Glenview IL 60025 (US)**

(72) Inventors:
• **MEI, Hai
Glenview, 60025 (US)**
• **ZORYA, Dmitry
Glenview, 60025 (US)**

(74) Representative: **HGF
HGF Limited
1 City Walk
Leeds LS11 9DX (GB)**

(54) **PRESSURE SENSORS HAVING IMPROVED DRIFT COMPENSATION**

(57) Disclosed example pressure sensors include: a temperature sensor; a pressure measurement assembly configured to output a pressure measurement signal;; and measurement circuitry configured to: in response to a first calibration trigger, record a first pressure measured via the electrode, a first timestamp, and a first temperature measurement measured via the temperature sensor; in response to a second calibration trigger, record a second pressure measured via the electrode, a second timestamp, and a second temperature measurement via the temperature sensor; and calculate a first sensor drift rate by: determining a temperature-compensated second measured pressure by removing a first thermal shift from the second pressure; and determining the first sensor drift rate as a first curve between the first measured pressure and the temperature-compensated second measured pressure.

FIG. 1A

**(Cont. next page)**

EP 4 571 281 A1

150

152 — Variable Pressure

102 —

104

110a — Mass Flow Controller

108a

106

110b — Mass Flow Controller

108b

Process Chamber

○
○
○

114

112 — Vacuum Pump

116 — Controller

**FIG. 1B**

**Description**

RELATED APPLICATIONS

The present application claims the benefit of U.S. Patent Application Serial No. 63/609,669, filed December 13, 2023, entitled "PRESSURE SENSORS HAVING IMPROVED DRIFT COMPENSATION." The entirety of U.S. Patent Application Serial No. 63/609,669 is expressly incorporated herein by reference.

FIELD OF THE DISCLOSURE

This disclosure is directed generally to pressure sensors and, more particularly, to pressure transducers having improved drift compensation.

BACKGROUND

Pressure sensors, or pressure transducers, measure the pressure of a fluid input to the sensor compared to a reference pressure. Pressure sensors may be constructed to compare the input pressure to a fixed reference pressure or to a variable reference pressure.

SUMMARY

Pressure sensors having improved drift compensation are disclosed, substantially as illustrated by and described in connection with at least one of the figures, as set forth more completely in the claims.

BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:

FIG. 1A is a block diagram of an example process control system including a pressure transducer having a fixed reference pressure, in accordance with aspects of this disclosure.
FIG. 1B is a block diagram of an example process control system including a pressure transducer coupled to a variable source of reference pressure, in accordance with aspects of this disclosure.
FIG. 2 is a schematic diagram of an example pressure sensor which may be used to implement the pressure sensors of FIGS. 1A and/or 1B, in accordance with aspects of this disclosure.
FIG. 3 is a graph illustrating an example current drift rate calculation that may be implemented by the pressure sensor of FIG. 2.
FIG. 4 is a flowchart representative of example machine readable instructions which may be performed by the pressure sensor of FIG. 2 to compensate pressure measurements for sensor drift.

The figures are not necessarily to scale. Wherever appropriate, similar or identical reference numerals are used to refer to similar or identical components.

DETAILED DESCRIPTION

For the purpose of promoting an understanding of the principles of the claimed technology and presenting its currently understood, best mode of operation, reference will be now made to the embodiments illustrated in the drawings and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.
Over time, conventional pressure sensors are exposed to contaminants, which may accumulate and result in changes to the measured capacitance for the same input pressure. This change in the measured capacitance (due to accumulation of particulate and/or other causes) over time is known as the "drift" of the pressure sensor. After sufficient time has passed, the drift can result in sufficient error in the output of the pressure sensor as to require replacement of the pressure sensor. Drift is unpredictable from device to device, such that drift cannot be reliably predicted at the time of manufacturing.

Disclosed example pressure sensors and methods compensate for drift that occurs in the pressure sensor by measuring the drift rate over an interval, and using the determined drift rate to predict the drift for the subsequent interval. In some examples, the pressure sensor is calibrated at a fixed reference pressure, at which time the drift rate can be measured and predicted for the subsequent interval. Disclosed example pressure sensors and methods exclude temperature-based error to determine the drift rate, such that temperature-derived errors do not affect the determination of the current drift rate. The pressure sensors and methods then compensate pressure measurements using the drift rate. As a result, disclosed pressure sensors and methods have a reduced measurement error over time.

As used herein, the term "fluid" includes matter in both liquid and gaseous states.

Disclosed example pressure sensors include: a temperature sensor; a pressure measurement assembly configured to output a pressure measurement signal; and measurement circuitry configured to: in response to a first calibration trigger, record a first pressure measured via the electrode, a first timestamp, and a first temperature measurement measured via the temperature sensor; in response to a second calibration trigger, record a second pressure measured via the electrode, a second timestamp, and a second temperature measurement via the temperature sensor; and calculate a first sensor drift rate by: determining a temperature-compensated second measured pressure by removing a first thermal shift from the second pressure; and determining the first sensor drift rate as a first curve between the first measured pressure and the temperature-compensated second measured pressure.

In some example pressure sensors, the temperature sensor is configured to measure an ambient temperature. In some example pressure sensors, the measurement circuitry is configured to compensate pressure measurements after the second timestamp based on the calculated first sensor drift rate.

In some example pressure sensors, the measurement circuitry is further configured to: in response to a third calibration trigger, record a third pressure measured via the electrode, a third timestamp, and a third temperature measurement via the temperature sensor; and calculate a second sensor drift rate by: determining a temperature-compensated third measured pressure by removing a second thermal shift from the third pressure; and determining the second sensor drift rate as a second curve between the temperature-compensated third measured pressure and at least one pressure prior to the third timestamp. In some example pressure sensors, the measurement circuitry is configured to compensate pressure measurements after the third timestamp based on the calculated second sensor drift rate. In some example pressure sensors, the measurement circuitry is configured to determine the curve as a linear slope from the temperature-compensated second measured pressure and the temperature-compensated third measured pressure, and is configured to compensate the pressure measurements after the third timestamp based on the second slope. In some example pressure sensors, the measurement circuitry is further configured to calculate additional sensor drift rates based on corresponding calibration triggers, and compensate subsequent pressure measurements based on a most recent sensor drift rate.

In some example pressure sensors, the first and second calibration trigger signals are received via an operator input device. In some example pressure sensors, the first and second calibration trigger signals are generated by an external controller based on an external measurement sensor determining that the input pressure is a predetermined reference pressure. In some example pressure sensors, the first thermal shift is based on a difference between the first temperature measurement and the second temperature measurement. In some example pressure sensors, the measurement circuitry is configured to determine the temperature-compensated second measured pressure based on a stored thermal model for the pressure sensor.

In some example pressure sensors, the measurement circuitry is configured to determine the drift rate as a linear slope. In some example pressure sensors, the measurement circuitry is configured to determine the drift rate as a polynomial curve. In some example pressure sensors, the pressure measurement assembly comprises at least one of a capacitance diaphragm gauge, a piezoresistive pressure sensor, a magnetic pressure sensor, a resonant frequency pressure sensor, an optical pressure sensor, or a piezoelectric pressure sensor.

Disclosed example methods to compensate a pressure sensor for drift involve: at a first time, recording a first pressure measured via a capacitance diaphragm gauge pressure sensor, a first timestamp, and a first temperature measurement measured via a temperature sensor; at a second time, recording a second pressure measured via the capacitance diaphragm gauge pressure sensor, a second timestamp, and a second temperature measurement measured via a temperature sensor; calculating a first sensor drift rate by: determining a temperature-compensated second measured pressure by removing a first thermal shift from the second pressure; and determining the first sensor drift rate as a curve between the first measured pressure and the temperature-compensated second measured pressure; and compensate pressure measurements after the second timestamp based on the calculated first sensor drift rate.

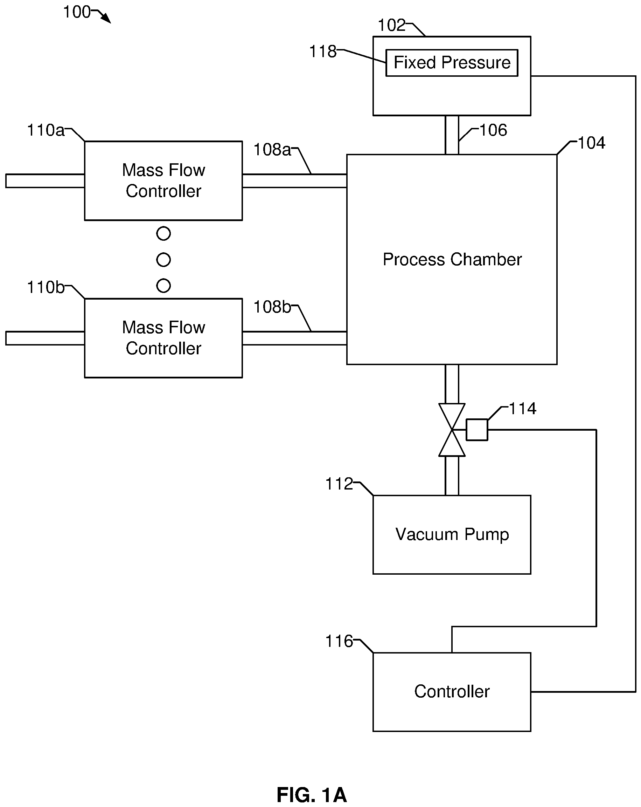

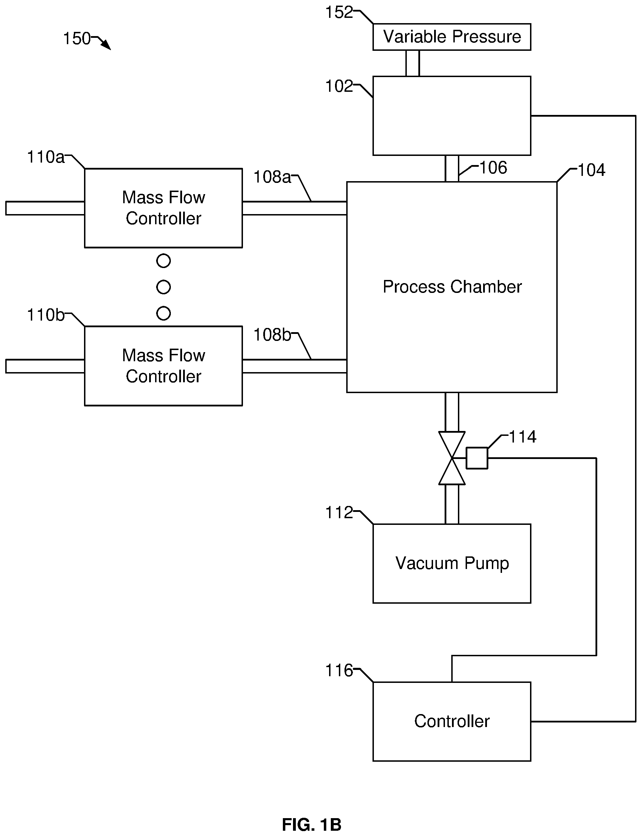

FIG. 1A is a block diagram of an example process control system 100 including a pressure sensor 102. The example process control system 100 of FIG. 1 includes a process chamber 104, to which the pressure sensor 102 is fluidly coupled via a fluid input line 106 to measure the pressure of the process chamber 104.

The example process chamber 104 may receive one or more inputs, such as process feed materials, via a corresponding number of feed lines 108a, 108b, which may be controlled via mass flow controllers 110a, 110b.

The example system 100 may include a vacuum pump 112, or other pressure control pump, and a valve 114 to control a flow rate between the vacuum pump 112 and the process chamber 104. The valve 114 may be controlled by a controller 116, computing device, and/or any other control technique, to maintain the pressure in the process chamber 104 within a desired range. The example pressure sensor 102 is communicatively coupled to the controller 116 to provide pressure feedback to the controller 116 (e.g., for use in a pressure control loop). For example, as the pressure in the process chamber 104 increases, the pressure sensor 102 measures the pressure and provides a signal representative of the pressure to the controller 116, which then controls the valve 114 to increase the flow rate from the process chamber 104 to the vacuum pump 112. The vacuum pump 112 may have an output to any appropriate location based on the nature of the process.

In the example of FIG. 1A, the pressure sensor 102 is configured with a fixed pressure 118, to which an input pressure of a fluid received via the fluid input line 106 is compared to output a pressure signal. For example, as discussed in more detail below, the pressure sensor 102 may be provided with a sealable evacuation port which may be sealed when the desired pressure is provided within the pressure sensor 102, and/or the pressure sensor 102 may be assembled and sealed within a volume having the desired reference pressure. The fixed pressure 118 may be a vacuum pressure or another predetermined fixed reference pressure which may be below, at, or above a nominal atmospheric pressure. In the configuration of FIG. 1A, the pressure sensor 102 may be used as an absolute pressure sensor.

FIG. 1B is a block diagram of another example process control system 150. The example process control system 150 includes the example pressure sensor 102, the process chamber 104, the fluid input line 106, the feed lines 108a, 108b, the mass flow controllers 110a, 110b, the vacuum pump 112, the valve 114, and the controller 116 of FIG. 1A. In the example of FIG. 1B, the pressure sensor 102 is coupled to a variable source 152 of reference pressure that is external to the pressure sensor 102. For example, the pressure sensor 102 may have a port (e.g., a selectively sealable evacuation port) that is connected to a source of reference pressure to operate as a pressure sensor with a variable reference, and/or which is vented to an ambient pressure to operate as a pressure gauge.

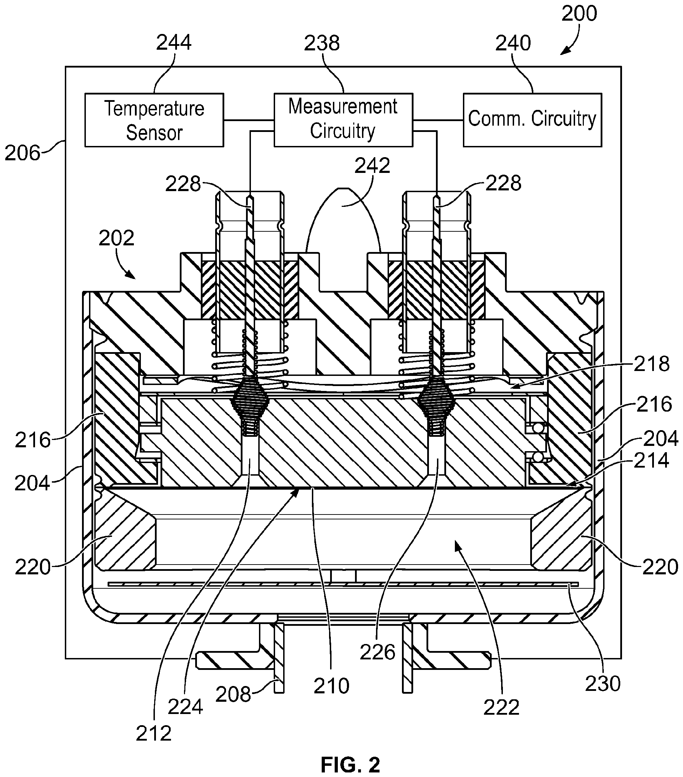

FIG. 2 is a schematic diagram of an example pressure sensor 200 which may be used to implement the pressure sensors 102 of FIGS. 1A and/or 1B. The example pressure sensor 200 includes a pressure measurement assembly 202, an inner housing 204, and an outer housing 206. The pressure sensor 200 receives a fluid via a fluid input line 208 (e.g., the fluid input line 106 of FIG. 1), measures the absolute pressure of the received fluid, and outputs one or more signals representative of the measured pressure.

The pressure measurement assembly 202 is a capacitive diaphragm gauge (CDG) sensor attached to the fluid input line 208. The pressure measurement assembly 202 may also be referred to as the "sensor core," in that the pressure measurement assembly 202 performs the measurements which are converted to output signals. The pressure measurement assembly 202 is at least partially surrounded by the inner housing 204. The inner housing 204 may provide thermal insulation and/or physical protection to the pressure measurement assembly 202. Both the pressure measurement assembly 202 and the inner housing 204 are at least partially surrounded by the outer housing 206. The outer housing 206 may provide thermal insulation and/or physical protection to the pressure measurement assembly 202.

In the illustrated example, the pressure measurement assembly 202 is a capacitance pressure sensor, in which a flexible diaphragm 210 is separated from an electrode 212 by a gap 214. The pressure measurement assembly 202 includes a first body 216 that defines a reference pressure cavity 218, and a second body 220 that defines a measured pressure cavity 222. The second body 220 is coupled to the fluid input line 208, such that the measured pressure cavity 222 has the same pressure as the fluid in the fluid input line 208. For example, the second body 220 may be welded, brazed, or otherwise sealed against the fluid input line 208 to provide a hermetic seal.

As the pressure at the fluid input line 208 changes relative to a reference pressure in the reference pressure cavity 218 (e.g., a vacuum pressure), the diaphragm 210 moves or flexes, changing the capacitance at the measurement electrode 212 in an amount that corresponds to the pressure at the fluid input line 208 and/or in the measured pressure cavity 222.

In the example of FIG. 2, the pressure measurement assembly 202 further includes a reference electrode 226, which also measures the capacitance as the diaphragm 210 moves in response to the pressure. The electrodes 212, 226 are metalized to form two capacitances with the flexible diaphragm 210. The signals generated by both electrodes 212, 226 change with the pressure but change at different rates. The signals from the reference electrode 226 are output via signal ports 228, and may be used to measure and offset common mode error (e.g., temperature induced error).

The capacitance signal is output from the pressure measurement assembly 202 via the signal ports 228, which is coupled to measurement circuitry 238 that converts the capacitance to a measurement signal and/or outputs the capacitance signal to an external signal conversion device. The measurement circuitry 238 may correct the measurement signal(s). The measurement signal(s), representative of the measured pressure in the pressure measurement assembly 202, may then be transmitted by the measurement circuitry 238 (e.g., to the controller 116 of FIG. 1A or 1B, to another control and/or data collection device, etc.) via communications circuitry 240 (e.g., a connector). In the example of FIG. 2, the example measurement circuitry 238 and the communications circuitry 240 are mounted within the pressure sensor 200 on one or more circuit boards.

To perform measurements and processing, the measurement circuitry 238 may be implemented using at least one controller or processor that controls the operations of the pressure sensor 200. The measurement circuitry 238 receives and processes multiple inputs. The measurement circuitry 238 may include one or more microprocessors, such as one or more "general-purpose" microprocessors, one or more special-purpose microprocessors and/or ASICS, and/or any other type of processing device. For example, the measurement circuitry 238 may include one or more digital signal processors (DSPs). The measurement circuitry 238 may further include memory devices and/or data storage devices.

The pressure sensor 200 may include a plasma shield 230 or other guard positioned between the fluid input line 208 diaphragm 210. The plasma shield 230 includes one or more apertures to allow the pressure of the input fluid to be applied to the diaphragm 210, but includes one or more surfaces to block contaminants, thereby reducing accumulation of contaminants on the diaphragm 210.

Example materials that may be used to construct the first body 216 and/or the second body 220 include corrosion resistant alloys, such as nickel alloys (e.g., Inconel® alloy) and/or superalloys, cobalt superalloys, iron superalloys, aluminum, copper alloys, titanium, and/or stainless steel.

To set a fixed reference pressure, the first body 216 may include an evacuation port 242 (e.g., a pinch tube or pinch-off tube). The evacuation port 242 is in fluid communication with the reference pressure cavity 218. During manufacturing and after sealing of the pressure measurement assembly 202, the pressure (e.g., vacuum or other set pressure) within the reference pressure cavity 218 is drawn via the evacuation port 242, which is pinched to seal the reference pressure cavity 218 when the desired pressure level is reached. In some other examples, the pressure measurement assembly 202 may be constructed and sealed in a volume in which the desired reference pressure is present, which fixes the desired reference pressure within the reference pressure cavity 218 when the evacuation port 242 is sealed via welding or pinch-off cold welding in a fixed pressure chamber.

In some examples in which a fixed reference pressure is set, a getter may be installed within the reference pressure cavity 218 and activated during manufacture, such as when the fixed reference pressure is established but before the reference pressure cavity 218 is sealed. Additionally or alternatively, the inner surfaces of the reference pressure cavity 218 (e.g., the first body 216 adjacent the reference pressure cavity 218, the electrode 212) are coated with a substance that reduces or prevents outgassing. An example coating that may be used is Parylene-C.

In some other examples, the evacuation port 242 may be left open to ambient pressure and/or connected to a variable source of reference pressure.

The inner housing 204 is attached to the second body 220 (e.g., using glue, welding, pressure fit, etc.). The outer housing 206 is secured to the measurement circuitry 238 and/or to the inner housing 204 (e.g., via fasteners, adhesive, welding, etc.).

The pressure sensor 200 further includes a temperature sensor 244 coupled to the measurement circuitry 238. The temperature sensor 244 measures an ambient or other environmental temperature that may affect the measurements by the electrodes 212, 226. For example, changes in temperature may change the size of the gap 214 and/or the tension of the diaphragm 210.

As mentioned above, the example measurement circuitry 238 may compensate for drift that occurs over time in the pressure sensor 200. To compensate for the drift, the measurement circuitry 238 may be calibrated at regular or irregular intervals to determine the measured output at a predetermined input pressure, as described in more detail below. The example measurement circuitry 238 may use sequential calibrations to determine a drift rate, and compensate measurements based on the determined drift rate.

Because the temperature of the pressure sensor 200 may contribute to measurement error in addition to the drift, the example measurement circuitry 238 compensates the calibration of the pressure sensor 200 to reduce or remove temperature-based error from the determination of the drift rate.

The measurement circuitry 238 records a timestamp, a pressure output voltage, and an ambient temperature T at a predetermined fixed pressure P0, which may be any arbitrary pressure. The measurement circuitry 238 may record the data in response to a triggering input, which may be an automatic trigger or an operator-accessible input device (e.g., a calibration button).

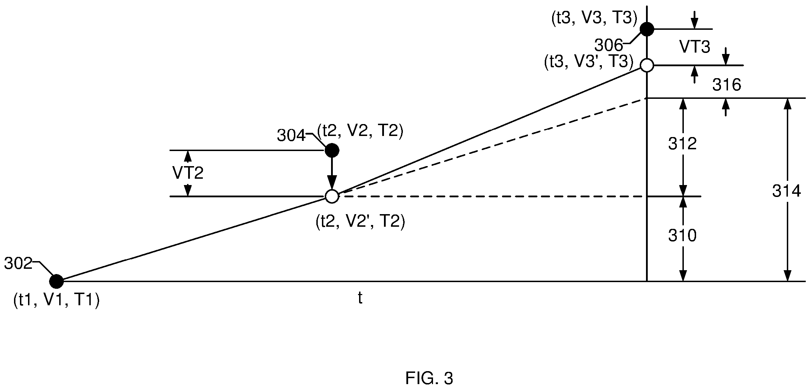

FIG. 3 is a graph 300 illustrating an example current drift rate calculation that may be implemented by the pressure sensor 200 of FIG. 2. The graph 300 illustrates a set of calibration measurements 302, 304, 306 taken at different times (t1, t2, t3) at a same predetermined pressure. The predetermined pressure may be determined based on a pressure sensor that is separate from the pressure sensor 200 and fluidly coupled to the input line 208.

At a first time t1 and at the predetermined pressure P0, the measurement circuitry 238 records the timestamp t1, an output V1 of the electrode 212, and a temperature T1 measured by the temperature sensor 244, as a calibration measurement 302. V1 and T1 are stored as base or reference measurements.

At a second time t2 and at the predetermined pressure P0, the measurement circuitry 238 records the timestamp t2, an output V2 of the electrode 212, and a temperature T2 measured by the temperature sensor 244, as a calibration measurement 304. Using stored temperature coefficients (e.g., % of full sensitivity per degree Celsius) at multiple temperatures (e.g., TZS for temperature coefficient at zero output, TSS for temperature coefficient at full sensitivity), and a full sensitivity output (VFS), the measurement circuitry 238 calculates a thermal shift VT2 between the first time t1 and the second time t2 using Equation 1:

$$VT2 = TZS * VFS * (T2\text{-}T1) + TSS * V1 * (T2\text{-}T1) \qquad \text{(Equation 1)}$$

To compensate subsequent measurements, the measurement circuitry 238 determines a projected drift rate (S12) from t1 to t2 using Equation 2:

$$S12 = (V2'\text{-}V1)/(t2\text{-}t1) \qquad \text{(Equation 2)}$$

In Equation 2, V2' is the temperature-compensated output, calculated as V2' = V2-VT2. The measurement circuitry 238 compensates pressure measurements using the projected drift rate S12 after t2 until t3. To compensate the pressure measurements, the measurement circuitry 238 removes the projected drift amount, which increases according to the projected drift rate S12 as time passes from t2, from measurements after t2. The measurement circuitry 238 compensates pressure measurements occurring after t2 to determine a compensated output V' using Equation 3:

$$V' = V - (V2'\text{-}V1) - S12 * (t\text{-}t2) - VT \qquad \text{(Equation 3)}$$

In Equation 3, V is the measured pressure output from the electrode 212, t is the time of the measured pressure output, and the thermal shift VT is determined according to Equation 4:

$$VT = TZS * VFS * (T\text{-}T1) + TSS * V * (T\text{-}T1) \qquad \text{(Equation 4)}$$

At a third time t3 and at the predetermined pressure P0, the measurement circuitry 238 records the timestamp t3, an output V3 of the electrode 212, and a temperature T3 measured by the temperature sensor 244, as a calibration measurement 306. Using the stored temperature coefficients TZS, TSS, and the full sensitivity output VFS, the measurement circuitry 238 calculates a thermal shift VT3 between the first time t1 and the third time t3 using Equation 5:

$$VT3 = TZS * VFS * (T3\text{-}T1) + TSS * V1 * (T3\text{-}T1) \qquad \text{(Equation 5)}$$

The measurement circuitry 238 again configures the output value for the pressure P0 to be equal to V1 to calibrate the output signals from the electrode 212. To compensate subsequent measurements following time t3, the measurement circuitry 238 determines a projected drift rate (S23) from t2 to t3 (which may be different than the drift rate from t1 to t2 and/or from t1 to t3) using Equation 6:

$$S23 = (V3'\text{-}V2')/(t3\text{-}t2) \qquad \text{(Equation 6)}$$

In Equation 6, V3' is calculated as V3-VT3. The measurement circuitry 238 continues to compensate pressure measurements occurring after t3 to determine a compensated output V' using Equation 3 above, substituting the current drift rate S23 and the most recent compensated outputs and time t3.

The measurement circuitry 238 may repeat the calibrations, drift rate calculations, and compensations at additional times past t3 to reduce the output error resulting from drift in the pressure sensor 200 over the operating life of the pressure sensor 200.

The graph 300 illustrates a total drift 310 from t1 to t2, a projected drift 312 from t2 to t3, a total compensated drift 314 at t3, and a remaining uncompensated drift 316 at t3.

Instead of a linear drift rate as illustrated in the example of FIG. 3, the example measurement circuitry 238 may calculate other drift curves, such as a polynomial drift curve. The drift curve may be based on fitting predetermined drift curve tendencies to observed temperature-compensated outputs and timestamps. For example, the measurement circuitry 238 may perform a regression analysis and/or any other type of analysis to determine the drift curve.

Additionally or alternatively, the measurement circuitry 238 may store all calibration data (e.g., timestamps, output signals, measured temperatures, etc.) in a storage device for subsequent retrieval. For example, the calibration data may be stored permanently, or for at least a predetermined or configurable time, and/or up to a memory limit of the measurement circuitry 238. The stored calibration data may be output to a maintenance system (e.g., via the communications circuitry 240). The maintenance system may analyze the calibration data for the pressure sensor 200 to, for example, update approximation curve coefficients (e.g., for performing curve fitting) based on the observed data and/or for the specific application or usage of the pressure sensor 200. The maintenance system then loads the updated coefficients back to the measurement circuitry 238 for storage and updated drift compensation determinations. The coefficients determined based on a first pressure sensor 200 may further be loaded into a replacement pressure sensor 200, so new pressure sensors 200 can have curve fitting coefficients that are more accurate for the same or similar applications.

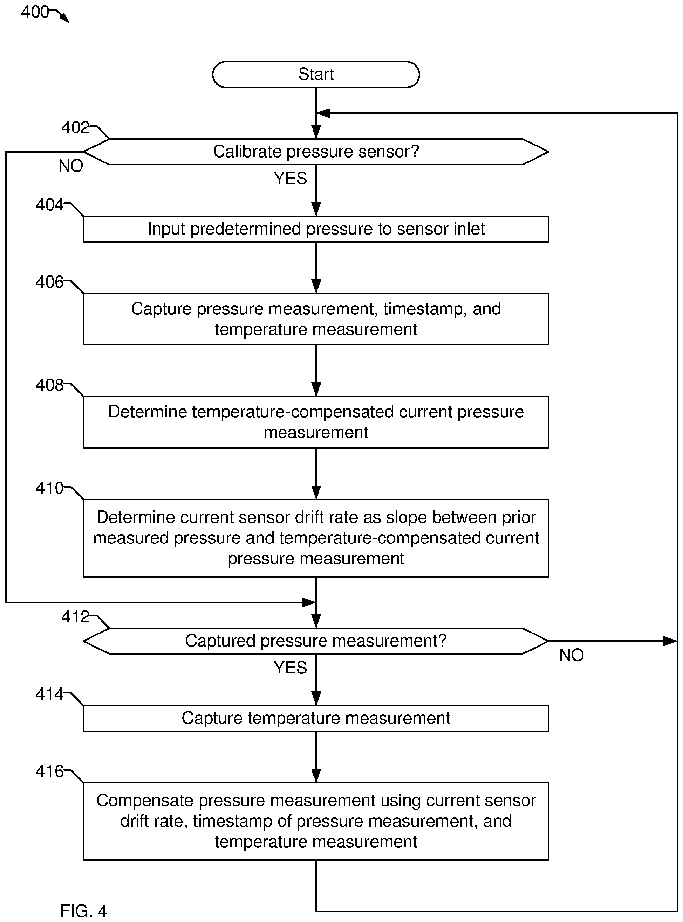

FIG. 4 is a flowchart representative of example machine readable instructions 400 which may be performed by the pressure sensor 200 of FIG. 2 to compensate pressure measurements for sensor drift. The example instructions 400 are described below with reference to the measurement circuitry 238. In the instructions below 400, a baseline measurement of pressure V1, time t1, and temperature T1 may have been previously captured at a startup or initialization of the pressure sensor 200.

At block 402, the measurement circuitry 238 determines whether to calibrate the pressure sensor 200. For example, the measurement circuitry 238 may receive an input signal from a control device (e.g., via the communications circuitry 240) or via an user input device (e.g., a calibration button). If a calibration is to be performed (block 402), the measurement circuitry 238 inputs a predetermined pressure to the fluid input line 208. For example, a source of a known input pressure may be connected to the input line 208, or a connected system may be configured to input the predetermined input pressure.

At block 406, the measurement circuitry 238 captures a pressure measurement, a timestamp, and a temperature measurement. For example, the measurement circuitry 238 may receive a signal from the electrode 212, a timestamp from a timer or clock, and a temperature measurement of an ambient or environment temperature from the temperature sensor 244, to represent one of the calibration measurements 302, 304, 306 of FIG. 3. At block 408, the measurement circuitry 238 determines a temperature-compensated current pressure measurement. For example, the measurement circuitry 238 may determine the temperature-compensated current pressure measurement V2' based on a thermal shift calculated using Equation 1 above.

At block 410, the measurement circuitry 238 determines a current sensor drift rate (e.g., S12, S23, etc.) as a curve based on the prior measured pressure (e.g., baseline or temperature-compensated) and a temperature-compensated current pressure measurement. For example, the measurement circuitry 238 may use Equation 2 or Equation 6 to determine a linear drift rate or may determine a polynomial drift curve or other non-linear drift curve.

After determining the sensor drift rate (block 410), or if the pressure sensor is not being calibrated (block 402), at block 412 the measurement circuitry 238 determines whether a pressure measurement has been captured. For example, the measurement circuitry 238 may determine a pressure measurement signal V from the electrode 212 at regular or irregular intervals, and/or in response to a trigger or event. If a pressure measurement is not captured (block 412), control returns to block 412.

When a pressure measurement is not captured (block 412), at block 414 the measurement circuitry 238 captures a temperature measurement via the temperature sensor 244.

At block 416, the measurement circuitry 238 compensates the pressure measurement signal V using the current sensor drift rate, the timestamp of the pressure measurement, and the temperature measurement. For example, the measurement circuitry 238 may use Equation 3 to determine the corrected pressure output. Control then returns to block 402.

While the examples disclosed above are described with reference to a CDG sensor, the disclosed example systems and methods are applicable to other types of pressure sensors subject to drift, such as piezoresistive pressure sensors, magnetic pressure sensors, resonant frequency pressure sensors, optical pressure sensors, piezoelectric pressure sensors, and/or any other type of pressure sensor.

As utilized herein, "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made, and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

**Claims**

1. A pressure sensor, comprising:

   a temperature sensor;
   a pressure measurement assembly configured to output a pressure measurement signal; and
   measurement circuitry configured to:

   in response to a first calibration trigger, record a first pressure measured via the electrode, a first timestamp, and a first temperature measurement measured via the temperature sensor;
   in response to a second calibration trigger, record a second pressure measured via the electrode, a second timestamp, and a second temperature measurement via the temperature sensor; and
   calculate a first sensor drift rate by:

   determining a temperature-compensated second measured pressure by removing a first thermal shift from the second pressure; and
   determining the first sensor drift rate as a first curve between the first measured pressure and the temperature-compensated second measured pressure.

2. The pressure sensor as defined in claim 1, wherein the temperature sensor is configured to measure an ambient temperature.

3. The pressure sensor as defined in claim 1, wherein the measurement circuitry is configured to compensate pressure measurements after the second timestamp based on the calculated first sensor drift rate.

4. The pressure sensor as defined in claim 1, wherein the measurement circuitry is further configured to:

   in response to a third calibration trigger, record a third pressure measured via the electrode, a third timestamp, and a third temperature measurement via the temperature sensor; and
   calculate a second sensor drift rate by:

   determining a temperature-compensated third measured pressure by removing a second thermal shift from the third pressure; and
   determining the second sensor drift rate as a second curve between the temperature-compensated third measured pressure and at least one pressure prior to the third timestamp.

5. The pressure sensor as defined in claim 4, wherein the measurement circuitry is configured to compensate pressure measurements after the third timestamp based on the calculated second sensor drift rate.

6. The pressure sensor as defined in claim 5, wherein the measurement circuitry is configured to determine the curve as a linear slope from the temperature-compensated second measured pressure and the temperature-compensated third measured pressure, and is configured to compensate the pressure measurements after the third timestamp based on the second slope.

7. The pressure sensor as defined in claim 4, wherein the measurement circuitry is further configured to calculate additional sensor drift rates based on corresponding calibration triggers, and compensate subsequent pressure measurements based on a most recent sensor drift rate.

8. The pressure sensor as defined in claim 1, wherein the first and second calibration trigger signals are received via an operator input device.

9. The pressure sensor as defined in claim 1, wherein the first and second calibration trigger signals are generated by an external controller based on an external measurement sensor determining that the input pressure is a predetermined reference pressure.

10. The pressure sensor as defined in claim 1, wherein the first thermal shift is based on a difference between the first temperature measurement and the second temperature measurement.

11. The pressure sensor as defined in claim 10, wherein the measurement circuitry is configured to determine the temperature-compensated second measured pressure based on a stored thermal model for the pressure sensor.

12. The pressure sensor as defined in claim 1, wherein the measurement circuitry is configured to determine the drift rate as a linear slope.

13. The pressure sensor as defined in claim 1, wherein the measurement circuitry is configured to determine the drift rate as a polynomial curve.

14. The pressure sensor as defined in claim 1, wherein the pressure measurement assembly comprises at least one of a capacitance diaphragm gauge (CDG), a piezoresistive pressure sensor, a magnetic pressure sensor, a resonant frequency pressure sensor, an optical pressure sensor, or a piezoelectric pressure sensor.

15. A method to compensate a pressure sensor for drift, the method comprising:

at a first time, recording a first pressure measured via a capacitance diaphragm gauge pressure sensor, a first timestamp, and a first temperature measurement measured via a temperature sensor;
at a second time, recording a second pressure measured via the capacitance diaphragm gauge pressure sensor, a second timestamp, and a second temperature measurement measured via a temperature sensor;
calculating a first sensor drift rate by:

determining a temperature-compensated second measured pressure by removing a first thermal shift from the second pressure; and
determining the first sensor drift rate as a curve between the first measured pressure and the temperature-compensated second measured pressure; and

compensate pressure measurements after the second timestamp based on the calculated first sensor drift rate.

**100**

102

118 — Fixed Pressure

110a

Mass Flow
Controller

108a

106

104

Process Chamber

○
○
○

110b

Mass Flow
Controller

108b

114

112

Vacuum Pump

116

Controller

**FIG. 1A**

**FIG. 1B**

**FIG. 2**

FIG. 3

314
316
VT3
312
310
(t3, V3, T3)
306
(t3, V3', T3)
(t2, V2, T2)
304
(t2, V2', T2)
VT2
t
(t1, V1, T1)
302

400

```
                    ┌─────────────┐
                    │    Start    │
                    └─────────────┘
                           │
```

402 ◇ Calibrate pressure sensor? ◇

NO          YES

404 │ Input predetermined pressure to sensor inlet │

406 │ Capture pressure measurement, timestamp, and temperature measurement │

408 │ Determine temperature-compensated current pressure measurement │

410 │ Determine current sensor drift rate as slope between prior measured pressure and temperature-compensated current pressure measurement │

412 ◇ Captured pressure measurement? ◇          NO

YES

414 │ Capture temperature measurement │

416 │ Compensate pressure measurement using current sensor drift rate, timestamp of pressure measurement, and temperature measurement │

FIG. 4

Europäisches
Patentamt

European
Patent Office

Office européen
des brevets

# EUROPEAN SEARCH REPORT

**Application Number**

EP 24 21 9552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/115039 A1 (CHAFEKAR SAUMITRA SANJEEV [DE] ET AL) 16 April 2020 (2020-04-16) * abstract; claim 1; figures 1,4,5,8 * * paragraphs [0002], [0024], [0026], [0032], [0047] - [0054], [0057] - [0060], [0062], [0073] - [0087], [0103] - [0112] * | 1-15 | INV. G01L9/00 G01L9/12 G01L19/00 G01L19/04 G01L27/00 |
| X | US 2022/074903 A1 (LO YING-CHE [TW] ET AL) 10 March 2022 (2022-03-10) * abstract; claims 1,12; figures 5A-8C * * paragraphs [0040], [0045] - [0074] * | 1-15 | |

TECHNICAL FIELDS
SEARCHED        (IPC)

G01L

The present search report has been drawn up for all claims

| Place of search | Date of completion of the search | Examiner |
|---|---|---|
| The Hague | 24 April 2025 | Nelva-Pasqual, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .............................................................................

& : member of the same patent family, corresponding
    document

EPO FORM 1503 03.82 (P04C01)

**EP 4 571 281 A1**

## ANNEX TO THE EUROPEAN SEARCH REPORT
## ON EUROPEAN PATENT APPLICATION NO.

EP 24 21 9552

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2025

| Patent document cited in search report | Publication date | Patent family member(s) | Publication date |
|---|---|---|---|
| US 2020115039 A1 | 16-04-2020 | CN 111060147 A | 24-04-2020 |
| | | EP 3640600 A1 | 22-04-2020 |
| | | KR 20200043290 A | 27-04-2020 |
| | | US 2020115039 A1 | 16-04-2020 |
| US 2022074903 A1 | 10-03-2022 | CN 114166267 A | 11-03-2022 |
| | | TW 202210799 A | 16-03-2022 |
| | | US 2022074903 A1 | 10-03-2022 |

EPO FORM P0459

For more details about this annex : see Official Journal of the European Patent Office, No. 12/82

**REFERENCES CITED IN THE DESCRIPTION**

**Patent documents cited in the description**

- US 63609669